Europäisches Patentamt

European Patent Office

Office européen des brevets

(19)

(11) **EP 1 575 232 A1**

(12) **EUROPEAN PATENT APPLICATION**

(43) Date of publication:
**14.09.2005 Bulletin 2005/37**

(51) Int Cl.$^7$: **H04L 27/26**

(21) Application number: **04251361.4**

(22) Date of filing: **10.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(71) Applicant: **MATSUSHITA ELECTRIC INDUSTRIAL CO., LTD.**
**Osaka-fu 571-8501 (JP)**

(72) Inventors:
• **Bell, Stewart John Hamish**
  **Oxfordshire RG9 3BZ (GB)**
• **Wong, Danny Yuk Kun**
  **Happy Valley, Hong Kong (HK)**

(74) Representative: **Dawson, Elizabeth Ann et al**
  **A.A. Thornton & Co.**
  **235 High Holborn**
  **London WC1V 7LE (GB)**

(54) **Fast Fourier Transformation (FFT) with adaption of the sampling rate in Digital Radio Mondiale (DRM) receivers**

(57)     A method of processing received radio signals in a receiver operating according to the DRM standard, in which the signals are converted to the receiver's baseband frequency, sampled and then subject to Fourier transformation to resolve QAM constellation points, wherein the sample rate of the signal on which the Fourier transform is performed is an integral multiple of the desired frequency spacing in the transform output and the Fourier transformation is a Fast Fourier Transformation.

EP 1 575 232 A1

**Description**

<u>Background</u>

Digital Radio Mondiale (DRM) is a new international standard for radio broadcasts at frequencies below 30MHz described in Digital Radio Mondiale (DRM): System Specification, ETSI TS 101 980 V1.1.1, September 2001. At the heart of this transmission system is the OFDM (Orthogonal Frequency Division Multiplex) modulated signal which is made up of a multitude of uniformly spaced frequency carriers. Throughout the duration of each transmission symbol, the phase and amplitude of each carrier is fixed to signal a point in the QAM constellation. The position of the constellation point is chosen to represent a series of data bits. These data bits originate from the data payload (compressed digital audio, binary image data, etc.) after channel error control coding and interleaving have been applied. The complete encoding procedure and modulation method are already defined in the DRM standard.

In DRM, the number of carriers and the length of each symbol vary with the transmission/robustness modes and the broadcast bandwidth to suit a wide range of broadcast environments:

| Robustness mode | Carrier number | Channel bandwidth (kHz) | | | | | |
|---|---|---|---|---|---|---|---|
| | | 4.5 | 5 | 9 | 10 | 18 | 20 |
| A | min. | 2 | 2 | -102 | -114 | -98 | -110 |
| | max. | 102 | 114 | 102 | 114 | 314 | 350 |
| B | min. | 1 | 1 | -91 | -103 | -87 | -99 |
| | max. | 91 | 103 | 91 | 103 | 279 | 311 |
| C | min. | | | | -69 | | -67 |
| | max. | | | | 69 | | 213 |
| D | min. | | | | -44 | | -43 |
| | max. | | | | 44 | | 135 |

| Robustness mode | Duration Tu | Carrier spacing 1/Tu | Duration of guard interval Tg | Duration of symbol Ts = Tu + Tg | Tg/Tu | Number of symbols per frame |
|---|---|---|---|---|---|---|
| A | 24 ms | 41 2/3 Hz | 2.66 ms | 26.66 ms | 1/9 | 15 |
| B | 21.33 ms | 46 7/8 Hz | 5.33 ms | 26.66 ms | 1/4 | 15 |
| C | 14.66 ms | 68 2/11 Hz | 5.33 ms | 20 ms | 4/11 | 20 |
| D | 9.33 ms | 107 1/7 Hz | 7.33 ms | 16.66 ms | 11/14 | 24 |

## Table 1  DRM signal characteristics

(Carrier number 0 is at the centre frequency of the d.c. component in a conventional A.M. channel.)

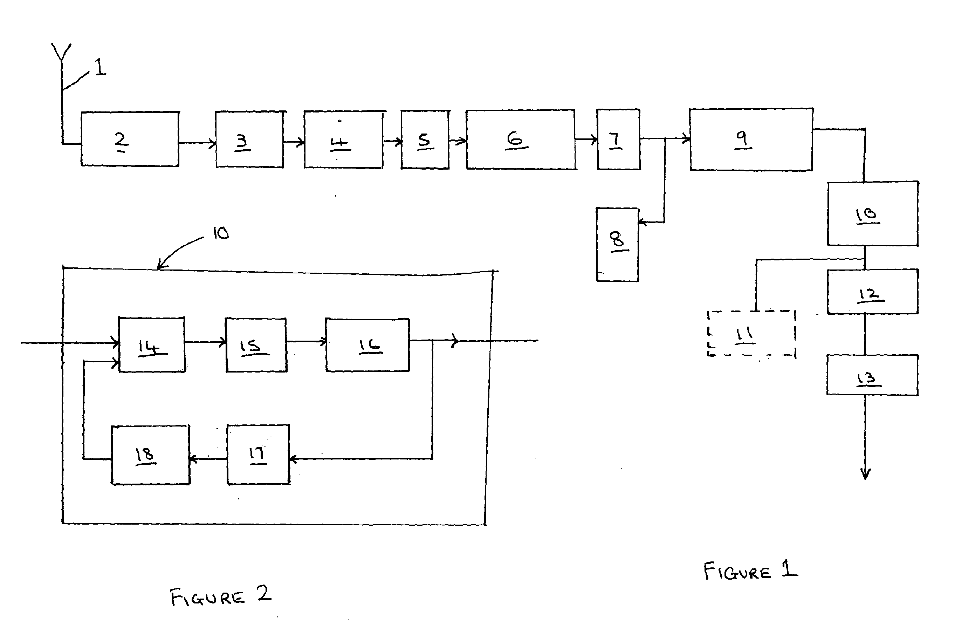

Figure 1 shows the basic components of a typical DRM receiver including antenna 1 providing RF input to channel selector and RF downconverter 2. The resulting intermediate frequency is supplied to A/D converter 3 and the digitised output is supplied to I/Q separator (mixer) 4. Separator 4 supplies baseband I/Q carriers to channel filter 5 and the filtered output is subject to timing adjustment or resampling at stage 6 to be described in more detail below. The output of stage 6 is subject to fast Fourier transform (FFT) at stage 7, the output of which is supplied to AFC and deinterleaver 9. Deinterleaver 9 supplies constellation point and channel state information to multi level coding (MLC) decoder 10, shown in more detail in figure 2. The output of MLC decoder 10 may be supplied to other decoders indicated at 11 as well as audio decoder 12 supplying D/A converter 13 which provides the audio output.

As shown in figure 2, MLC decoder 10 comprises metric generator 14, depuncturer 15 and Viterbi decoder 16. Decision feedback metric adaptation is optionally provided by convolutional encoder 17 and puncturer 18.

In a typical DRM receiver, after the translation of the received RF signal from the DRM broadcast frequency slot to the receiver's own intermediate frequency, the baseband signal is resolved into its in-phase and quadrature (I and Q) components, i.e. complex time domain samples. Depending on the design of the DRM demodulator, any number of the intermediate frequency (IF) stages may be used. If the final IF is high, the number of down-conversion stages is reduced, but possibly at the expense of more stringent performance requirements in the IF filter circuit design. In the extreme, the RF signal is not down-converted at all, and sampled directly after it has been suitably filtered to remove all out-of-band signals. The baseband signal is further separated into individual carrier frequencies, each of which bears a QAM constellation point. The coordinates of the constellation point determine the encoded data payload.

Fourier transform is known as the process which transforms a continuous time signal to the frequency domain. To carry out the Fourier transform of a signal sampled at a constant interval, the Discrete Fourier Transform (DFT) is used.

The mathematic expression of the DFT is given as,

$$H_n = \sum_{k=0}^{N-1} h_k e^{2\pi kn/N}$$

where $h_k$ represents the complex time domain baseband samples, and $N$ is the number of carriers.

The relationship between the continuous frequency domain components and the numeric output of the DFT is given by,

$$H\,(f_n) \approx TH_n$$

where each carrier frequency

$$f_n = \frac{n}{N} \cdot \frac{1}{T} \text{ and } n = -\frac{N}{2},...,\frac{N}{2}$$

and $T$ is the sampling period.

The frequency components are equally spaced at $1/NT.$ It is clear that the frequency spacing is directly proportional to the sampling rate of the input baseband signal. Also note that in different Robustness Modes of DRM, the carrier spacing is different, and there is no simple harmonic relationship.

Using the formulation of the DFT shown above, the computational burden of a direct evaluation on the baseband signal (which is already windowed by the length of the transmission symbol $N$) via convolutions is non-trivial. There are known techniques for performing a DFT with reduced computational demands. The classical choice is the so-called Fast Fourier Transform (FFT) made famous by Cooley and Tukey, see "An Algorithm for the Machine Calculation of Complex Fourier Series", J.W. Cooley and J.W. Tukey. Math. Of Computation, issue 19, 1965. This paper documented the rediscovery of the FFT technique which was conceived in many early texts. This method is highly efficient in both hardware and software implementations due to its symmetrical and regular structure. However, the number of its input (time domain signal samples) and output (complex frequency components) are both restricted to integer exponentials of 2, i.e. $N$ must be an integer exponential of 2.

It is worth mentioning that there are other efficient DFT techniques such as the Winograd Fourier Transform (On Computing the Discrete Fourier Transform, S. Winograd. Math. Of Comp., issue 32, 1978) (the number of frequency bins are restricted to a few fixed values, and complicated hardware implementation), and the Prime Factor FFT (A Prime Factor FFT Algorithm Using High-Speed Convolution, D.P. Kolba and T.W. Parks. IEEE Trans. ASSP, vol.25, no.4, August 1977) (requires breaking down of the long transform into shorter prime factored ones). They are not widely used because of their inherent restrictions.

Summary of the Invention

The present invention provides a method as described in annexed claim 1. Thus, the signal is modified at stage 6 before being supplied to the FFT 7. Preferably, the sample rate is an integral multiple of the desired frequency spacing in the Fourier transform output. This can be achieved either by use of a suitable sample rate or by interpolation to provide more samples and thereby supply a larger apparent sample rate to the Fourier transform.

An embodiment of the invention will now be described by way of example only. In the drawing:

Figure 1 is a schematic diagram of the basic components of a DRM receiver; and

Figure 2 shows the components of a MLC decoder.

**Detailed Description**

Embodiments of this invention will now be described by way of example.

As can be seen in Table 1, the number of OFDM carriers is never an integer power of 2. On the surface this would suggest that it is not suitable to deploy the Cooley and Tukey FFT to evaluate the DFT efficiently.

*Key point 1* An alternative approach is to use a bigger FFT which would generate more frequency components than the number of carriers, and then discarding the unwanted ones. This would appear somewhat wasteful, but the computational benefits from using the FFT still outweigh direct DFT evaluation. To use the FFT, the number of input samples to the FFT is chosen to be equal to the next integer exponential of 2 above the number of frequency carriers. For example, if the number of complex carriers is 205, as in Robustness mode A at channel bandwidth 9kHz, then the number of complex input samples ($N$) would be $2^8$ or 256. In order to keep the frequency spacing exactly 41 2/3 Hz, the sampling rate would need to be (256 x 41 2/3) = 10666 2/3 Hz.

In order to use the FFT, the number of complex time domain samples from the symbol needs to be exactly the same number of complex frequency bins. This would imply a number of different sample rates for different transmission/robustness modes and channel bandwidths.

As the carrier spacing is fixed within each Robustness mode, the highest sampling rate required in a particular mode is determined from the maximum number of carriers. (To be more accurate, the maximum number of carrier should be rounded up to the next integer exponential of 2.) The values for each Robustness mode are tabulated below.

Note that the centre frequency of the transmission is always fixed at carrier number *n* = 0. Hence the maximum number of carriers to be generated by the FFT is twice the integer exponential of 2 necessary on the side of the transmission band with more carriers. For example, in Robustness mode A at 20kHz channel bandwidth, the carrier numbers on the two sides are -110 and 350. On the positive side, the minimum integer exponential of 2 is 512, and thus the size of the FFT is twice that at 1024.

Table 2

| Standard sampling rates | | | |
|---|---|---|---|
| Robustness mode | Maximum number of carriers (rounded up) | Carrier spacing 1/Tu | Sampling rate |
| A | 1024 | 41 2/3 Hz | 42666 2/3 Hz |
| B | 1024 | 46 7/8 Hz | 48000 Hz |
| C | 512 | 68 2/11 Hz | 34909 1/11 Hz |
| D | 512 | 107 1/7 Hz | 54857 1/7 Hz |

Given that *N* is always a power of 2, if fewer carriers are required to be evaluated (due to a narrower channel bandwidth), then the number of samples to include in each FFT can be reduced by decimating systematically at 1:2, 1:4, 1:8, etc.

*Key Point 2* In practical implementations, only a single or a limited number of fixed sample rates would be available. However, a variety of techniques are available to workaround the sample rate restriction:

1. Interpolation of received signal in the time domain. This may be done by polyphase filtering or other means.

2. Over-sample the received signal at a rate which is the lowest common multiple (LCM) of all the different ones, and then decimate accordingly to accommodate different FFT sizes and frequency spacing. For example, the LCM for the standard sampling rates of the four Robustness modes as shown in Table 2 is 384000 Hz. To obtain the standard rate samples in Robustness mode A, a decimation factor at 1:9 is required, i.e. one sample is accepted in every 9. Similarly for Robustness modes B, C and D, the decimation factors are given as 1:8, 1:11 and 1:7 respectively.

**Claims**

1. A method of processing received radio signals in a receiver operating according to the DRM standard, in which the signals are converted to the receiver's baseband frequency, sampled and then subject to Fourier transformation to resolve QAM constellation points, **characterized in that** the sample rate of the signal on which the Fourier transform is performed is an integral multiple of the desired frequency spacing in the transform output and the Fourier transformation is a fast Fourier Transformation.

2. A method as claimed in claim 1 in which the signals are sampled at a first rate, interpolated to a higher sampling rate, subject to the Fast Fourier transformation and then decimated to remove unwanted frequency bins.

3. A method as claimed in claim 1 or 2 in which the sample rate is obtained from the desired number of carriers, rounded up to the nearest higher power of two and multiplied by the desired frequency spacing.

4. A method as claimed in claim 1, 2 or 3 for processing signals having a variety of numbers of carriers, in which the signals are sampled or interpolated to produce a digital signal for Fourier transformation whose sample rate is a multiple of the different frequency spacings of the carriers.

EP 1 575 232 A1

1

| 2 | → | 3 | → | 4 | → | 5 | → | 6 | → | 7 | → | 9 |

8

10

11

12

13

FIGURE 1

FIGURE 2

10

| 14 | → | 15 | → | 16 |

| 18 | ← | 17 |

European Patent
Office

**EUROPEAN SEARCH REPORT**

Application Number

EP 04 25 1361

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | FRANK HOFMANN, CHRISTIAN HANSEN, WOLFGANG SCHÄFER: "Digital Radio Mondiale (DRM) Digital Sound Broadcasting in the AM Bands"<br>IEEE TRANSACTIONS ON BROADCASTING, [Online]<br>vol. 49, no. 3,<br>3 September 2003 (2003-09-03), pages 319-328, XP002319507<br>Retrieved from the Internet:<br>URL:http://ieeexplore.ieee.org/iel5/11/276 33/01233023.pdf> [retrieved on 2005-02-28]<br>* page 322 - page 325 *<br>* figures 1,2,5-7,11 *<br>* tables II,IV *<br>----- | 1-4 | H04L27/26 |
| X | WO 02/23781 A (INDUSTRIAL RESEARCH LIMITED; COULSON, ALAN, JAMES; LOKUGE, CHATURANGA,) 21 March 2002 (2002-03-21)<br>* the whole document *<br>----- | 1-3 | |
| A | EP 1 175 056 A (BRITISH BROADCASTING CORPORATION) 23 January 2002 (2002-01-23)<br>* the whole document *<br>----- | 1-3 | **TECHNICAL FIELDS SEARCHED (Int.Cl.7)**<br><br>H04H<br>G06F<br>H04L |
| A | US 2003/058950 A1 (MCCOY JAMES WESLEY) 27 March 2003 (2003-03-27)<br>* paragraph [0006] *<br>----- | 1 | |
| A | CA 2 116 209 A1 (LU, IAN D; LEE, PHILIP) 23 August 1995 (1995-08-23)<br>* the whole document *<br>----- | 1,2 | |

The present search report has been drawn up for all claims

| Place of search | Date of completion of the search | Examiner |
|---|---|---|
| Munich | 1 March 2005 | Horn, R |

EPO FORM 1503 03.82 (P04C01)

**ANNEX TO THE EUROPEAN SEARCH REPORT
ON EUROPEAN PATENT APPLICATION NO.**                EP 04 25 1361

This annex lists the patent family members relating to the patent documents cited in  the above-mentioned European search report.
The members are as contained in the European Patent Office EDP file on
The European Patent Office is in no way liable for these particulars which are merely  given for the purpose of information.

01-03-2005

| Patent document cited in search report | | Publication date | Patent family member(s) | | Publication date |
|---|---|---|---|---|---|
| WO 0223781 | A | 21-03-2002 | NZ | 506558 A | 29-04-2003 |
| | | | AU | 8272601 A | 26-03-2002 |
| | | | CA | 2420388 A1 | 21-03-2002 |
| | | | EP | 1336267 A1 | 20-08-2003 |
| | | | WO | 0223781 A1 | 21-03-2002 |
| | | | US | 2003156534 A1 | 21-08-2003 |
| EP 1175056 | A | 23-01-2002 | GB | 2365283 A | 13-02-2002 |
| | | | EP | 1175056 A1 | 23-01-2002 |
| US 2003058950 | A1 | 27-03-2003 | NONE | | |
| CA 2116209 | A1 | 23-08-1995 | NONE | | |

EPO FORM P0459

For more details about this annex : see Official Journal of the European Patent Office, No. 12/82